# FASCICULE DE BREVET EUROPEEN

(11) **EP 3 229 166 B1**
(45) Date de publication et mention de la délivrance du brevet: **10.06.2020**
(21) Numéro de dépôt: 17164635.9
(22) Date de dépôt: 03.04.2017
(51) Int. Cl.: G06F 21/83, G06F 21/86

(54) **DÉTECTION D'OUVERTURE D'UN DISPOSITIF DE SAISIE DE DONNÉES**
VORRICHTUNG ZUM ERKENNEN DES ÖFFNENS EINES EINGABEGERÄTES
DETECTION OF THE OPENING OF A DATA INPUT DEVICE

(30) Priorité: 08.04.2016 FR 1653130
(43) Date de publication de la demande: 11.10.2017
(73) Titulaire: INGENICO GROUP, 75015 Paris (FR)
(72) Inventeur: ANDRE, Jérôme, 26800 MONTOISON (FR)
(74) Mandataire: Vidon Brevets & Stratégie

(56) Documents cités:
- EP-A1- 2 146 562
- FR-A1- 2 906 623
- US-A1- 2016 070 939

## Description

### 1. Domaine de l'invention

L'invention se rapporte au domaine des dispositifs de saisie de données, tels que des terminaux de paiement. L'invention se rapporte plus particulièrement à la sécurisation de tels dispositifs de saisie de données, par exemple par détection d'ouverture ou d'intrusion.

### 2. Art Antérieur

Les terminaux de paiement traitant des données sensibles, il est nécessaire de les protéger contre des tentatives de fraudes, via des mesures de protections, matérielles et/ou logicielles.

Parmi les mesures de protection matérielles, on trouve notamment les techniques destinées à détecter l'ouverture du capot du terminal de paiement électronique, via par exemple la mise en œuvre de « fausses touches » en élastomère associées à des « pads carbone » ou des « dômes métal », qui permettent de vérifier que le terminal ne subit pas une tentative de démontage.

En effet, un terminal de paiement comprend, de manière classique, une demi-coque supérieure et une demi-coque inférieure, encore appelées capots supérieur et inférieur. Le capot supérieur comprend des ouvertures qui sont utilisées par exemple pour laisser dépasser les touches du clavier et l'écran d'affichage du terminal de paiement.

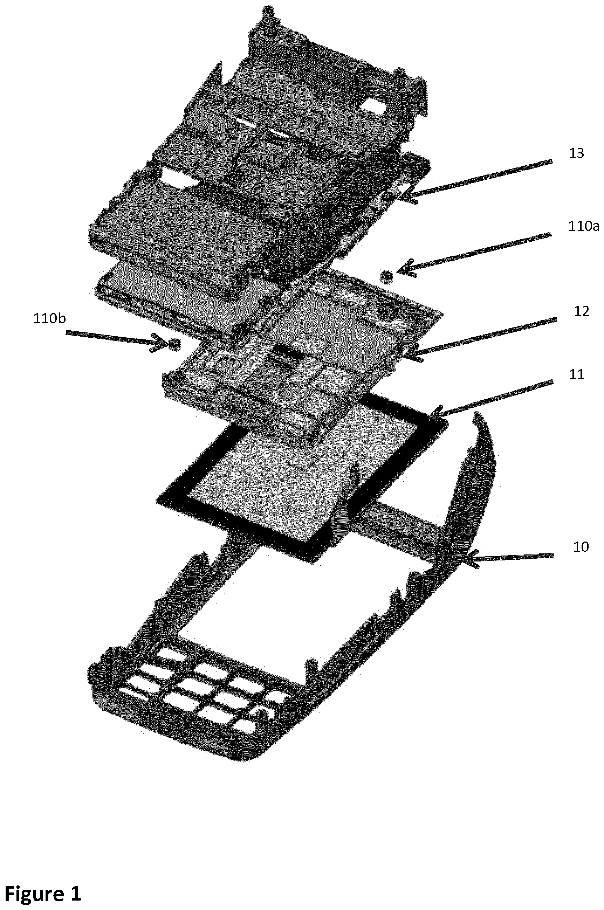

Classiquement, les différentes pièces d'un terminal de paiement sont montées par l'intérieur du capot supérieur afin d'assurer la sécurité du terminal, comme illustré par exemple en figure 1, qui représente une vue de l'intérieur du capot supérieur. De plus, au niveau du clavier par exemple, les dispositifs « fausses touches » sont utilisés pour vérifier que le capot supérieur 10 du terminal est bien emboité d'une part dans le capot inférieur et d'autre part que les fausses touches reposent sur au moins une carte de circuit imprimé (carte mère 13) présente dans le terminal de paiement. Ceci permet de s'assurer que le terminal de paiement n'est pas ouvert et donc qu'il n'y a pas de tentative d'introduction d'un dispositif espion au niveau du clavier du terminal de paiement par exemple. Les fausses touches sont pressées par exemple par l'intermédiaire d'une extension en plastique (pleine ou non) s'étendant de l'intérieur du capot supérieur pour venir prendre place sur la fausse touche de la carte de circuit imprimé (carte mère). Au niveau de l'écran, lorsque la dalle capacitive 11 (permettant à la fois l'affichage de données et la saisie de données de manière tactile) est montée par l'intérieur du capot supérieur 10, une technique sensiblement équivalente est mise en œuvre, par exemple via des éléments 110a et 110b prévus sur un circuit imprimé 12, dit support afficheur, pour exercer un effort entre la carte mère 13 et le capot supérieur 10. Cette solution de l'art antérieur est généralement assez efficace. Néanmoins, cette solution est assez ancienne et ne convient pas nécessairement aux nouveaux types de terminaux de paiement, de préférence de taille de plus en plus petite.

En effet, il est difficile de créer de telles fausses touches lorsque les touches du clavier sont disposées de manière compacte et serrée car la solution de l'art antérieur nécessite des espaces relativement importants entre les touches afin que des extensions en plastique s'étendant de l'intérieur du capot supérieur puissent traverser le clavier et venir prendre place sur la fausse touche de la carte mère. Or, dans une optique de réduction de la taille des terminaux de paiement, l'espace disponible pour de telles extensions en plastique n'est pas obligatoirement présent.

Un autre inconvénient des techniques matérielles de sécurisation des terminaux de paiement tient à des exigences esthétiques et de fabrication des terminaux de paiement actuels. Ainsi, il est souvent préconisé un montage de la dalle capacitive par l'extérieur du capot supérieur, de manière à ce que l'écran tactile soit réellement affleurant à la surface du terminal de paiement, comme c'est le cas par exemple pour les smartphones. Il est ainsi actuellement prévu de coller la dalle capacitive sur le capot supérieur, au lieu de la monter par l'intérieur du terminal de paiement. Or, d'un point de vue sécuritaire, la dalle capacitive ne peut plus être utilisée pour détecter une intrusion ou une ouverture du capot supérieur du terminal de paiement, via des éléments présentant des efforts entre la carte mère du terminal de paiement et le capot supérieur et fermant un interrupteur, permettant ainsi de détecter une ouverture du capot par détection de l'ouverture de l'interrupteur. En effet, ces efforts auraient pour effet, sur une dalle capacitive collée par l'extérieur du capot supérieur, de la décoller.

Il existe donc un besoin pour une solution permettant de détecter une ouverture ou une intrusion dans un terminal de paiement, afin d'éviter tout accès à des zones sensibles d'un point de vue sécuritaire, notamment lorsque la dalle capacitive est collée par l'extérieur du capot supérieur du terminal de paiement. Une telle technique doit donc permettre une telle détection, sans générer d'effort entre la carte mère du terminal de paiement et la dalle capacitive, de manière à ne pas favoriser le décollement de cette dernière. Le document de l'art antérieur EP2146562-A2 divulgue un système électronique comprenant un circuit intégré comportant deux faces opposées ainsi qu'un dispositif de protection contre les tentatives d'accès au système électronique. Le document d'art antérieur FR2906623 divulgue un dispositif anti-intrusion pour carte électronique comprenant un circuit flexible comportant une piste électriquement conductrice en forme de treillis.

### 3. Résumé

L'invention concerne un dispositif de saisie de données comprenant un capot supérieur sur lequel est fixée une dalle capacitive, la dalle capacitive présentant au moins un élément de sécurité flexible présentant au moins une piste électrique reliée à un module de détection de coupure dans le dispositif, la forme et le montage de l'élément de sécurité dans le dispositif étant adaptés pour exercer un effort sur la face interne du capot supérieur.

Ainsi, l'invention propose une solution nouvelle et inventive de la sécurisation d'un dispositif de saisie de données, par exemple un terminal de paiement électronique, permettant de détecter une tentative d'ouverture du terminal par son capot supérieur sur lequel est collée une dalle capacitive.

Pour ce faire, l'invention prévoit la mise en œuvre d'au moins un élément de sécurité flexible présentant une (ou plusieurs) piste(s) électrique(s), fixé sous la dalle capacitive (elle-même fixée par-dessus le capot supérieur) et permettant d'exercer un effort sous le capot supérieur, sans toutefois exercer d'effort sur la dalle capacitive, ce qui favoriserait son décollement.

En effet, la forme spécifique et le montage de l'élément de sécurité dans le dispositif lui permettent d'exercer cet effort à l'intérieur du capot supérieur. Ainsi, lorsqu'une tentative d'arrachement de la dalle capacitive intervient, l'élément de sécurité peut être détérioré et la piste électrique qui le traverse endommagée voire même coupée, ou bien le contact entre le module de détection de coupure et la piste électrique de l'élément de sécurité est coupé. De cette manière, toute tentative d'ouverture ou d'intrusion dans le terminal de paiement par décollement de la dalle capacitive est détectée via la détection d'une coupure de la ou des pistes électriques parcourant l'élément de sécurité.

En particulier, l'élément de sécurité présente au moins deux parties dont la première partie est fixée sur la face interne de la dalle capacitive et la deuxième partie s'étend, dans une première position de montage, perpendiculairement à la première partie. De plus, la deuxième partie de l'élément de sécurité peut prendre également les positions suivantes :
- une deuxième position de montage dans laquelle la deuxième partie est insérée dans au moins une ouverture correspondante ménagée dans le capot supérieur ;
- une position de sécurisation dans laquelle la deuxième partie est repliée le long d'une partie de la face interne du capot supérieur pour exercer un effort sur la face interne du capot supérieur.

Ainsi, selon ce mode de réalisation de l'invention, l'élément de sécurité flexible est fixé sous la dalle capacitive et inséré dans une ouverture dédiée dans le capot supérieur avant d'être replié à l'intérieur du capot supérieur, de façon à exercer un effort sur le capot supérieur, sans toutefois exercer d'effort qui favoriserait le décollement de la dalle capacitive.

Pour ce faire, l'élément de sécurité présente donc au moins deux parties, l'une étant fixée sous la dalle capacitive et l'autre s'étendant perpendiculairement pour pouvoir être insérée dans une ouverture dédiée du capot supérieur puis repliée sous le capot supérieur pour y exercer un effort.

Selon un aspect particulier de l'invention, le module de détection de coupure est situé sur un circuit imprimé monté à l'intérieur du capot supérieur du dispositif et, dans la position de sécurisation, le module de détection de coupure se trouve en contact avec la deuxième partie de l'élément de sécurité, et plus particulièrement avec la piste ou les pistes électriques parcourant l'élément de sécurité.

Ainsi, selon ce mode de réalisation de l'invention, la détection de coupure de la piste électrique de l'élément de sécurité s'effectue grâce à un module de détection de coupure situé sur un circuit imprimé monté, par l'intérieur du terminal, directement sous la dalle capacitive. De cette manière, lorsque la dalle capacitive est montée, l'élément de sécurité replié par l'intérieur sur le capot supérieur et le circuit imprimé portant le module de détection de coupure monté également, la pise électrique de l'élément de sécurité se trouve en contact avec le module de détection de coupure.

Par exemple, le circuit imprimé correspond au support afficheur situé juste en-dessous de la dalle capacitive.

De cette manière, lorsque le dispositif de saisie de données est entièrement monté, l'élément de sécurité de la dalle capacitive est en contact avec le module de détection de coupure. De ce fait, lorsqu'une tentative d'arrachement/décollement de la dalle capacitive intervient, par exemple afin de tenter d'accéder à l'intérieur du dispositif, l'élément de sécurité (détérioré ou décollé du capot supérieur) ne se trouve plus en contact avec le module de détection de coupure, lequel détecte alors une tentative d'intrusion dans le dispositif.

Par exemple, l'élément de sécurité correspond à un circuit imprimé flexible, noté FPC.

L'invention concerne également un procédé de détection d'une intrusion dans un dispositif de saisie de données tel que décrit précédemment, selon les différents modes de réalisation de l'invention, via une étape de détection d'une intrusion lorsque la (ou les) piste(s) électrique(s) de l'élément de sécurité est (sont) coupée(s).

Selon les différents modes de réalisation de l'invention, le procédé de détection est mis en œuvre par exemple par un module de détection de coupure du dispositif.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue schématique d'une partie d'un terminal de paiement selon l'art antérieur, déjà discuté ;
- la figure 2 illustre un exemple d'un élément de sécurité selon un mode de réalisation de l'invention ;
- les figures 3a à 3c illustrent différentes positions d'un élément de sécurité, selon un mode de réalisation de l'invention.

### 5. Description

Le principe général de la technique décrite consiste à sécuriser un dispositif de saisie de données, présentant une dalle capacitive montée par l'extérieur du capot supérieur du dispositif, en munissant la dalle capacitive d'au moins un élément de sécurité flexible présentant une piste électrique reliée à un module de détection de coupure, permettant d'exercer un effort sous le capot supérieur et ainsi de détecter toute tentative de décollement de la dalle capacitive.

Ainsi, la solution de l'invention, selon ses différents modes de réalisation, permet de sécuriser un dispositif de saisie de données avec une dalle capacitive montée par l'extérieur du capot supérieur, en utilisant le principe d'un élément exerçant un effort sur le capot, par l'intérieur, afin de ne pas favoriser le décollement de la dalle capacitive. De plus, cet élément de sécurité est parcouru par au moins une piste électrique dont la coupure, lorsque l'élément est endommagé ou décollé de l'intérieur du capot supérieur par exemple, est détectée par un module de détection de coupure.

Par la suite, on décrit plus particulièrement des modes de réalisation dans lesquels le dispositif de saisie de données correspond à un terminal de paiement électronique, mais l'invention s'applique à tout dispositif de saisie de données répondant aux mêmes problématiques de sécurisation. On décrit également des modes de réalisation dans lesquels un seul élément de sécurité est prévu, parcouru par une seule piste électrique.

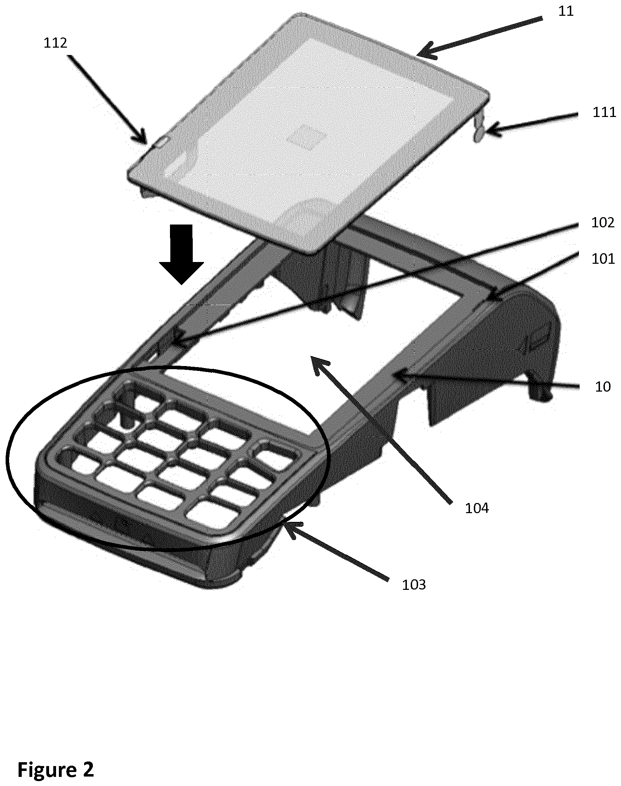

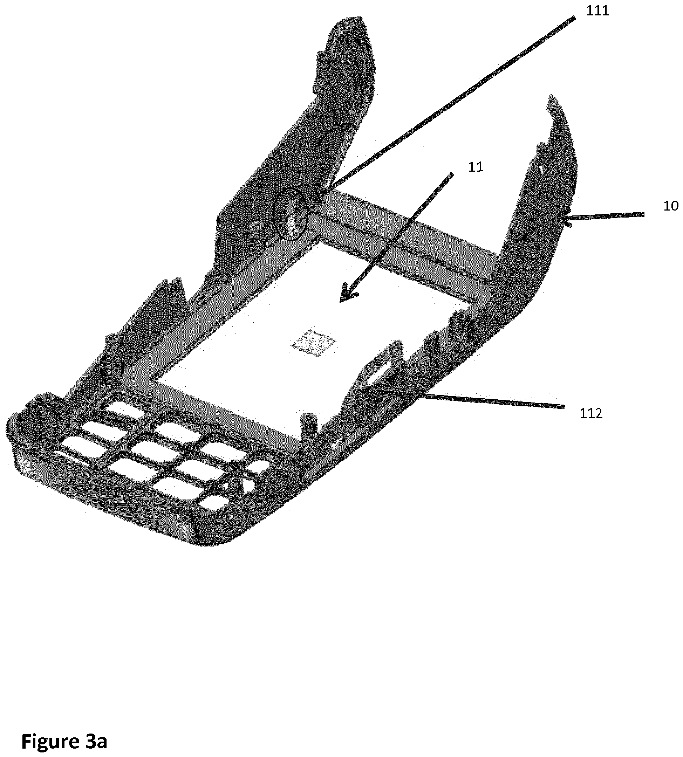

On décrit maintenant, en relation avec les figures 2 et 3a à 3c, un exemple de mise en œuvre de l'invention dans un terminal de paiement électronique présentant un capot supérieur 10.

La figure 2 illustre une vue de dessus d'une partie d'un tel terminal de paiement électronique, et en particulier du capot supérieur 10 qui présente une pluralité de petites ouvertures 103 destinées à accueillir les touches d'un clavier, ainsi qu'une large ouverture rectangulaire 104 destinée à accueillir une dalle capacitive 11.

Une telle dalle capacitive 11 comprend notamment, de manière connue, un élément de connexion 112, destiné à s'insérer dans l'ouverture 102 prévue à cet effet dans le capot supérieur 10 pour assurer la connexion entre la dalle capacitive et un ou plusieurs circuits imprimés du terminal de paiement électronique.

De plus, selon ce mode de réalisation de l'invention, la dalle capacitive 11 présente un élément de sécurité 111, destiné à permettre la détection de toute tentative d'intrusion/ouverture du terminal de paiement électronique par décollement de cette dalle capacitive 11.

Cet élément de sécurité 111 comporte au moins deux parties, dont l'une permet sa fixation sur la dalle capacitive 11 (non visible sur la figure 2) et l'autre permet son interaction avec le capot supérieur 10 pour exercer un effort. De plus, l'élément de sécurité 111 est parcouru par une piste électrique (non illustrée) entrant en contact avec un module de détection de coupure (non illustré) du terminal de paiement électronique, de telle sorte que lorsque la piste électrique est coupée suite à une tentative de décollement de la dalle capacitive 11 et donc à un endommagement/détachement de l'élément de sécurité, une tentative d'intrusion dans le terminal de paiement électronique est détectée.

Selon ce mode de réalisation, et dans la première position de montage de la dalle capacitive 11 sur le capot supérieur 10 illustrée en figure 2, l'élément de sécurité 111 est donc fixé sur la surface interne de la dalle capacitive 11, c'est-à-dire vers le capot supérieur 10, dans le sens de montage indiqué par la flèche pleine sur la figure 1. Par exemple, la dalle capacitive 11 est collée sur le capot supérieur 10 par ses bords, dans un emplacement prévu à cet effet sur le capot supérieur 10.

De plus, l'élément de sécurité 111 comprend également une partie s'étendant perpendiculairement à la surface interne de la dalle capacitive 11, toujours dans le sens de montage de la dalle capacitive 11 sur le capot supérieur 10, de façon à pouvoir s'insérer dans l'ouverture 101 prévue à cet effet dans le capot supérieur 10.

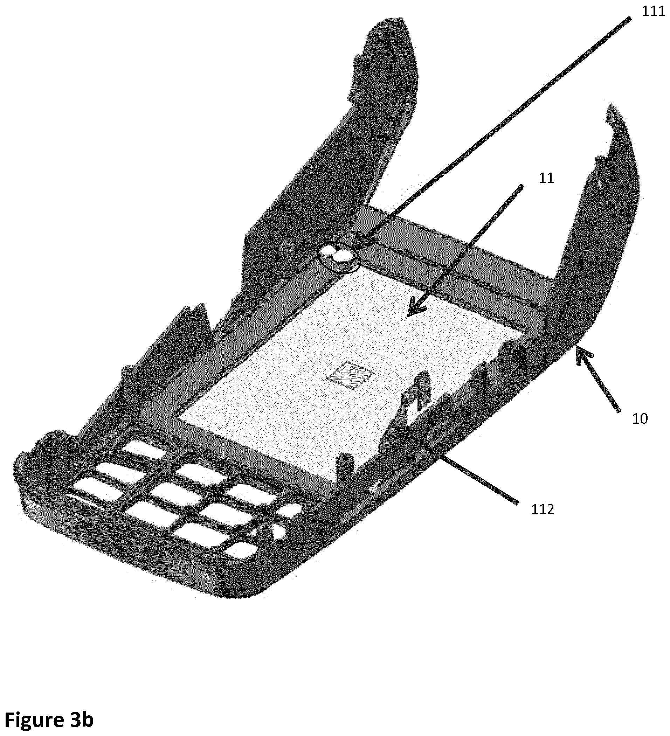

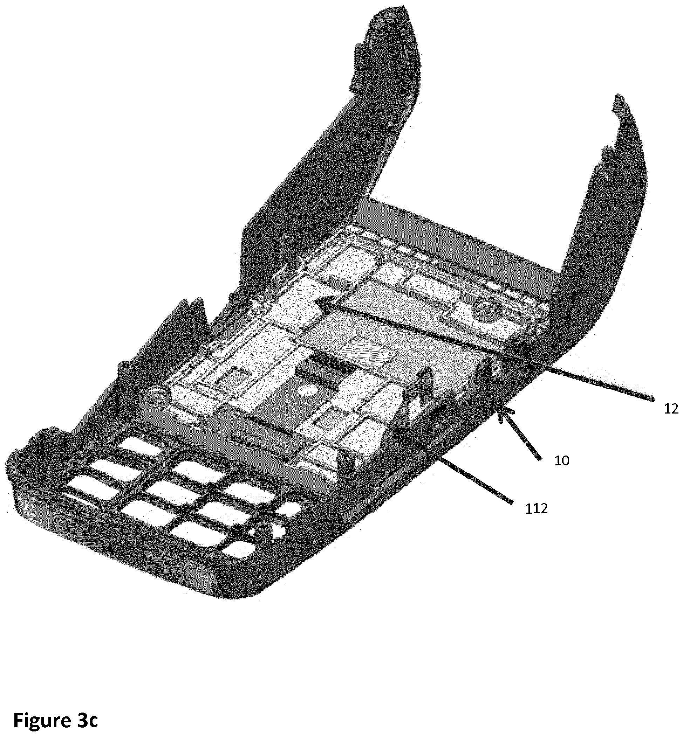

Les figures 3a à 3c illustrent des vues de l'intérieur (de dessous) du capot supérieur 10, respectivement dans une deuxième position de montage (figure 3a), une position de sécurisation (figure 3b) et une position (figure 3c) dans laquelle la dalle capacitive 11 est recouverte par un support afficheur 12.

Comme illustré en figure 3a, la dalle capacitive 11 est positionnée (par exemple collée) sur le capot supérieur 10, l'élément de connexion 112 est inséré dans l'ouverture correspondante 102 du capot supérieur 10 et l'élément de sécurité 111 est inséré dans l'ouverture correspondante 101 du capot supérieur 10.

Pour exercer un effort sur le capot supérieur 10 en position de sécurisation (comme illustré en figure 3b), la deuxième partie de l'élément de sécurité 111 (c'est-à-dire la partie qui s'étendait perpendiculairement sous la dalle capacitive 11 dans les positions de montage) doit être ensuite repliée à l'intérieur du capot supérieur. L'élément de sécurité 111 est par exemple collé (par adhésif ou toute autre technique de collage) sur la surface interne du capot supérieur 10, de manière à exercer l'effort souhaité.

Par exemple, l'élément de sécurité 111 correspond à un circuit imprimé flexible/souple (par exemple un FPC, pour « *Flexible Printed Circuit* » en anglais), afin de pouvoir assurer ses deux fonctions souhaitées pour sécuriser le terminal de paiement électronique :
- un effort sur le capot supérieur 10, par l'intérieur, grâce à sa flexibilité et la possibilité de le replier une fois inséré dans l'ouverture correspondante du capot supérieur,
- un contact électrique avec un module détecteur de coupure du terminal de paiement électronique, grâce à sa piste électrique, pour la détection d'une coupure au moment d'une tentative de décollement de la dalle capacitive 11.

Pour que la détection de coupure puisse être mise en œuvre, il est donc nécessaire que l'élément de sécurité 111 entre en contact avec un module de détection de coupure du terminal de paiement électronique, comme cela est illustré par exemple en figure 3c.

Ainsi, par exemple, un support afficheur 12 est positionné, toujours par l'intérieur du capot supérieur 10, de façon à recouvrir la partie de l'élément de sécurité 111 repliée sur la surface interne du capot supérieur 10 et ainsi établir un contact entre l'élément de sécurité 111 et un module de détection de coupure.

Ainsi, lorsque le terminal de paiement est entièrement monté et en état de fonctionner, l'élément de sécurité de la dalle capacitive est en contact avec un module de détection de coupure. Lorsqu'une tentative de décollement de la dalle capacitive intervient, soit l'élément de sécurité est endommagé, et donc la piste électrique qui le parcourt également, soit l'élément de sécurité se trouve arraché de l'intérieur du capot supérieur et le contact avec le module de détection est donc coupé. Dans tous ces cas, le module de détection détecte une coupure de contact et donc une tentative d'intrusion dans le terminal de paiement électronique.

Ainsi, l'invention concerne également, selon un mode de réalisation, un procédé de détection d'une intrusion dans un tel dispositif de saisie de données sécurisé, via au moins un élément de sécurité tel que décrit ci-dessus. Pour ce faire, le procédé de détection met en œuvre une étape de détection d'une intrusion lorsque la piste électrique de l'élément de sécurité 111 est coupée. Cette détection est notamment mise en œuvre par le ou les circuits de détection de coupure, connus en soi et non décrits ici.

## Revendications

1. Dispositif de saisie de données comprenant un capot supérieur (10) sur lequel est fixée, par l'extérieur, une dalle capacitive (11) comprenant au moins un élément de sécurité flexible (111), inséré dans au moins une ouverture correspondante (101) dudit capot supérieur (10), ledit élément de sécurité présentant au moins une piste électrique reliée à un module de détection de coupure de ladite piste électrique dans ledit dispositif, la forme et le montage dudit au moins un élément de sécurité (111) dans ledit dispositif étant adaptés pour exercer un effort sur la face interne dudit capot supérieur (10).

2. Dispositif de saisie de données selon la revendication 1, **caractérisé en ce que** ledit au moins un élément de sécurité (111) présente au moins deux parties dont la première partie est fixée sur la face interne de ladite dalle capacitive (11) et la deuxième partie s'étend, dans une première position de montage, perpendiculairement à ladite première partie et **en ce que** ladite deuxième partie dudit élément de sécurité peut prendre également les positions suivantes :
• une deuxième position de montage dans laquelle ladite deuxième partie est insérée dans ladite au moins une ouverture correspondante (101) ménagée dans ledit capot supérieur (10);
• une position de sécurisation dans laquelle ladite deuxième partie est repliée le long d'une partie de la face interne dudit capot supérieur (10) pour exercer ledit effort sur ladite face interne dudit capot supérieur (10).

3. Dispositif de saisie de données selon la revendication 2, **caractérisé en ce que** ledit module de détection de coupure est situé sur un circuit imprimé (12) monté à l'intérieur dudit capot supérieur (10) dudit dispositif et **en ce que**, dans ladite position de sécurisation, ledit module de détection de coupure se trouve en contact avec ladite deuxième partie dudit élément de sécurité (111) et avec ladite au moins une piste électrique.

4. Dispositif de saisie de données selon la revendication 1, **caractérisé en ce que** ledit au moins un élément de sécurité (111) correspond à un circuit imprimé flexible, noté FPC.

5. Procédé de détection d'une intrusion dans un dispositif de saisie de données selon l'une quelconque des revendication 1 à 4, **caractérisé en ce qu'**il comprend une étape de détection d'une intrusion lorsque ladite au moins une piste électrique dudit au moins un élément de sécurité (111) est coupée.

## Patentansprüche

1. Dateneingabegerät, umfassend eine obere Abdeckung (10), an der von außen eine kapazitive Platte (11) befestigt ist, die mindestens ein flexibles Sicherheitselement (111) aufweist, das in mindestens eine entsprechende Öffnung (101) der oberen Abdeckung (10) eingesetzt ist, wobei das Sicherheitselement mindestens eine elektrische Leiterbahn aufweist, die mit einem Modul zum Erkennen einer Unterbrechung der elektrischen Leiterbahn in dem Gerät verbunden ist, wobei die Form und das Anbringen des mindestens einen Sicherheitselements (111) in dem Gerät angepasst sind, um eine Kraft auf die Innenseite der oberen Abdeckung (10) auszuüben.

2. Dateneingabegerät nach Anspruch 1, **dadurch gekennzeichnet, dass** das mindestens eine Sicherheitselement (111) mindestens zwei Teile aufweist, wovon der erste Teil auf der Innenseite der kapazitiven Platte (11) befestigt ist und sich der zweite Teil in einer ersten Einbauposition senkrecht zu dem ersten Teil erstreckt und dadurch, dass der zweite Teil des Sicherheitselements ebenfalls die folgenden Positionen einnehmen kann:
• eine zweite Einbauposition, in der der zweite Teil in die mindestens eine entsprechende Öffnung (101), die in der oberen Abdeckung (10) ausgebildet ist, eingesetzt werden kann,
• eine Sicherungsposition, in der der zweite Teil entlang eines ersten Teils der Innenseite der oberen Abdeckung (10) umgebogen ist, um die Kraft auf die Innenseite der oberen Abdeckung (10) auszuüben.

3. Dateneingabegerät nach Anspruch 2, **dadurch gekennzeichnet, dass** das Modul zum Erkennen einer Unterbrechung auf einer gedruckten Schaltung (12) angeordnet ist, die im Inneren der oberen Abdeckung (10) des Gerätes befestigt ist, und dadurch, dass sich das Modul zum Erkennen einer Unterbrechung in der Sicherungsposition in Kontakt mit dem zweiten Teil des Sicherheitselements (111) und mit der mindestens einen elektrischen Leiterbahn befindet.

4. Dateneingabegerät nach Anspruch 1, **dadurch gekennzeichnet, dass** das mindestens eine Sicherheitselement (111) einer flexiblen gedruckten Schaltung, die FPC genannt wird, entspricht.

5. Verfahren zum Erkennen eines Eindringens in ein Dateneingabegerät nach einem der Ansprüche 1 bis 4, **dadurch gekennzeichnet, dass** es einen Schritt des Erkennens eines Eindringens aufweist, wenn die mindestens eine elektrische Leiterbahn des mindestens einen Sicherheitselements (111) unterbrochen ist.

## Claims

1. Data-entry device comprising an upper cover (10) to which a capacitive pad (11) is affixed through the exterior, comprising at least one flexible security element (111), inserted into at least one corresponding opening (101) made in said upper cover (10), said security element having at least one electrical track connected to a cut-detection module of said electrical track in said device, the shape and the mounting of said at least one security element (111) in said device being adapted to exerting a force on the internal face of said upper cover (10).

2. Data-entry device according to claim 1, **characterized in that** said security element (111) has at least two parts, of which the first part is affixed to the internal face of said capacitive pad (11) and the second part extends, in a first mounting position, perpendicularly to the first part and **in that** said second part of said security element can also take the following positions:
• a second mounting position in which said second part is inserted into said at least one corresponding opening (101) made in said upper cover (10);
• a securing position in which said second part is folded along one part of the internal face of said upper cover (10) to exert said force on said internal face of said upper cover (10).

3. Data-entry device according to claim 2, **characterized in that** said cut-detection module is situated on a printed-circuit board (12) mounted inside said upper cover (10) of said device and **in that**, in said securing position, the cut-detection module is in contact with said second part of said security element (111) and with said at least one electrical track.

4. Data-entry device according to claim 1, **characterized in that** said at least one security element (111) corresponds to a flexible printed-circuit board, denoted as FPC.

5. Method for detecting an intrusion into a data-entry device according to any one of the claims 1 to 4, **characterized in that** it comprises a step for detecting an intrusion when said at least one electrical track of said at least one security element (111) is cut.
